**Europäisches Patentamt**

**European Patent Office**

**Office européen des brevets**

(19)

(11) Veröffentlichungsnummer: **0 006 496**
**A1**

(12) # EUROPÄISCHE PATENTANMELDUNG

(21) Anmeldenummer: **79101798.1**

(22) Anmeldetag: **07.06.79**

(51) Int. Cl.³: **H 04 L 27/10**, H 04 L 7/02,
**H 04 J 3/06**

(30) Priorität: **30.06.78 DE 2828757**

(43) Veröffentlichungstag der Anmeldung: **09.01.80**
**Patentblatt 80/1**

(84) Benannte Vertragsstaaten: **AT DE FR IT NL**

(71) Anmelder: **ROBERT BOSCH GMBH, Postfach 50,
D-7000 Stuttgart 1 (DE)**

(72) Erfinder: **Gunkel, Michael, Dipl.-Ing.,
Stephanstrasse 33, D-1000 Berlin 41 (DE)**

(74) Vertreter: **Schmidt, Hans-Ekhardt, Robert Bosch
GmbH Geschäftsbereich Elektronik Patent- und
Lizenzabteilung Forckenbeckstrasse 9-13, D-1000
Berlin 33 (DE)**

(54) **Verfahren zur Taktrückgewinnung.**

(57) Es wird ein Verfahren zur Taktrückgewinnung angegeben, das bei der seriellen Übertragung von Daten bei
nichtkohärenter Frequenzumtastung dient. Das Verfahren
umfaßt sendeseitig die Addition eines Additivs bei jedem
Codewort der zu übertragenden Daten einer Datenquelle
in einer ersten Addierschaltung, wobei mit dem erhaltenen
Kanalcode empfangsseitig über eine Schaltungsanordnung die Taktfrequenz des Empfängertaktes hervorgerufen und auf das einlaufende Signal synchronisiert wird,
während zur Rekonstruktion jedes von der Datenquelle
ausgesendeten Codewortes des Kanalcodes empfangsseitig das zum Additiv inverse Element in einer zweiten
Addierschaltung addiert wird.

## Stand der Technik

Die Erfindung geht von einem Verfahren nach der Gattung des Hauptanspruchs aus.

Eine digitale Signalfolge, die von Schaltwerken hervorgerufen und verarbeitet wird, ist durch Logikzustände und einen Takt gekennzeichnet, mit dem die Logikzustände aufeinanderfolgen. Wenn eine solche Signalfolge über einen Nachrichtenkanal von einem Sender zu einem Empfänger übertragen werden soll, dann müssen die Logikzustände und der Takt durch übertragungsfähige physikalische Vorgänge dargestellt werden, zum Beispiel durch Modulation der Signalfolge auf einen Träger.

Ein bekanntes Verfahren zur seriellen Übertragung von binären Signalen ist die Frequenzumtastung, bei der den Logikzuständen verschiedene Frequenzen zugeordnet sind. Wenn der Takt des binären Signals zum Beispiel fest an die Phasen von zwei umgetasteten Frequenzen gebunden ist, dann spricht man von kohärenter Übertragung. Die feste Phasenbeziehung ermöglicht, den Takt der binären Signalfolge eindeutig zurückzugewinnen. Wenn jedoch eine solche Phasenbeziehung fehlt, dann ist die Rückgewinnung des Taktes aus dem undemodulierten Signal nicht möglich. In diesem Fall wird die Rückgewinnung des Taktes aus dem demodulierten Signal vorgenommen, wobei die Logikzustände durch zwei Spannungspegel dargestellt sind. Im Prinzip wird ein freilaufender Oszillator verwendet, der durch die Logikwechsel synchronisiert wird. Wenn die Logikwechsel ausbleiben, weil zum Beispiel eine Anzahl gleicher Logikzustände übertragen wird, dann besteht die Gefahr, daß Sende- und Empfangstakt auseinanderlaufen. Durch erhöhten Aufwand zur Steigerung der Frequenzstabilität kann der Tendenz des Auseinanderlaufens des Sende- und Empfangstaktes zwar entgegengewirkt werden, aber dann wird das Verfahren kompliziert und sehr aufwendig.

Vorteile der Erfindung

Das erfindungsgemäße Verfahren mit den kennzeichnenden Merkmalen des Hauptanspruchs hat den Vorteil, daß das Verfahren einfach und kostengünstig anzuwenden ist, indem durch geeignete Codierung dafür gesorgt wird, daß die Anzahl gleichartiger Logikzustände ein Maximum nicht überschreitet, so daß auch der Aufwand hinsichtlich der Frequenzstabilität begrenzt ist. Wenn die Codewörter einer Datenquelle derart ausgelegt sind, daß die Datenquelle auch eine Folge von Codewörtern ohne Logikwechsel aussendet, dann kann durch geeignetes Umcodieren erreicht werden, daß pro Codewort mindestens ein Logikwechsel auftritt. Das Umcodieren kann zwar auch dadurch erreicht werden, daß ein "Paritätsbit" hinzugefügt wird, dadurch wird jedoch das Codewort verlängert und damit die Übertragungsrate gesenkt. Vorteilhafterweise wird beim erfindungsgemäßen Verfahren das zu übertragende Codewort nicht verlängert und damit auch nicht die Übertragungsrate gesenkt, weil zu jedem Codewort lediglich eine konstante Binärzahl addiert wird, wobei eventuell entstehende "Überträge" unberücksichtigt bleiben.

Durch die in den Unteransprüchen aufgeführten Maßnahmen wird eine vorteilhafte Weiterbildung des im Hauptanspruch angegebenen Verfahrens erzielt. Besonders vorteilhaft ist, daß das "Additiv" so gewählt ist, daß weder das Null- noch das Einswort entstehen, indem der aus allen auftretenden Codewörtern gebildete Quellencode unvollständig ist.

Zeichnung

Ein Ausführungsbeispiel der Erfindung ist an Hand der Zeichnung näher erläutert. Es zeigen:

Fig. 1   ein Blockdiagram für die Übertragung von Daten mit Taktrückgewinnung nach der Erfindung;

Fig. 2   ein Blockschaltbild zur empfangsseitigen Taktsynchronisation nach der Erfindung und

Fig. 3   ein Ausführungsbeispiel zur Erläuterung des Verfahrens nach der Erfindung.

Beschreibung der Erfindung

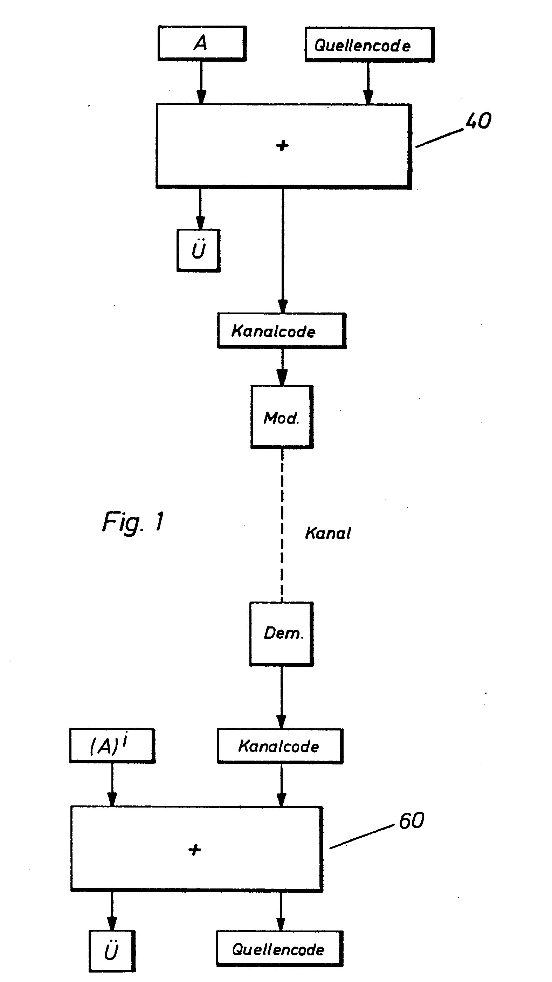

In Fig. 1 ist ein Blockdiagramm für die Übertragung von Daten dargestellt, wobei in einer nicht gezeigten Datenquelle ein Quellencode hervorgerufen wird, dessen Codewörter in einer ersten Addierschaltung 50 jeweils zu einem "Additiv" A addiert werden. Dabei ist das Additiv so gewählt, daß weder das Null- noch das Einswort auftreten, indem der aus allen auftretenden Codewörtern

- 4 -

gebildete Quellencode nicht vollständig ist. Als Additiv wird zu jedem Codewort eine konstante Binärzahl addiert, wobei eventuell entstehende "Überträge" Ü unberücksichtigt bleiben.

Der über die Addierschaltung 50 erhaltene Kanalcode enthält nunmehr pro Codewort mindestens einen Logikwechsel, der - nach einer Modulation und Übertragung des Kanalcodes auf einen Kanal und einer anschließenden Demodulation - empfangsseitig zur Taktrückgewinnung über eine Schaltungsanordnung 40 herangezogen wird.

Darüber hinaus wird zur Rekonstruktion der einzelnen von der Datenquelle ausgesendeten Codewörter des Kanalcodes empfangsseitig zu jedem Codewort das zum Additiv inverse Element $(A)^i$

in einer zweiten Addierschaltung 60 addiert, nämlich

$$(A)^i = 2^n - A,$$

wobei A das Additiv und n die Codewortlänge ist.

Die zwei bei dem bevorzugten Verfahren erforderlichen Additionen lassen sich beispielsweise sehr einfach mit binären Volladdierern durchführen, wobei entstehende Überträge Ü unberücksichtigt bleiben.

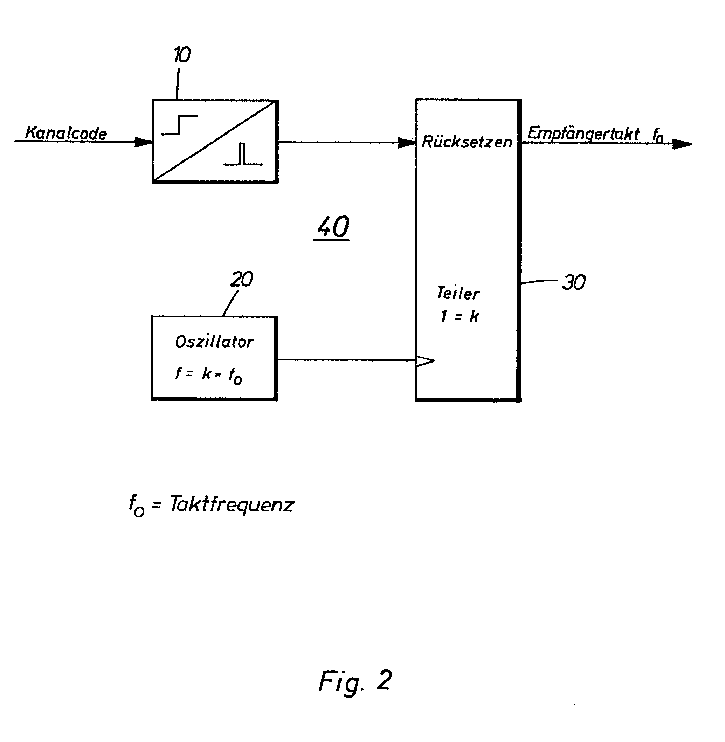

In Fig. 2 ist ein Blockschaltbild zur empfangsseitigen Taktsynchronisation gezeigt. Dabei wird der nach dem vorteilhaften Verfahren gewonnene Kanalcode auf die Schaltungsanordnung 40 mit einer Schaltungseinrichtung 10 geführt, die aus jedem Logikwechsel einen Impuls erzeugt. Der hervorgerufene Impuls wird beispielsweise auf den Rücksetzeingang eines Teilerschaltkreises 30 gegeben, der die Frequenz eines angeschlossenen freischwingenden Oszillatorschaltkreises 20 auf die Taktfrequenz des Empfängertaktes herunterteilt, so daß der empfangsseitig erzeugte Takt auf das einlaufende Signal synchronisiert wird.

Eine gewisse Grenze des vorteilhaften Verfahrens ergibt sich, wenn die Abweichung einer Flanke des Logikwechsels vom Sollzeitpunkt größer als 1/4 Bitlänge wird.

Beispielsweise diene zum Erzeugen eines Kanalcodes als Datenquelle ein Meßgerät, das die Meßgröße als Ziffernfolge im natürlichen BCD-Code liefert. Bei einer Folge von Nullen liefert die Datenquelle keine Logikwechsel:

| | | oder | |
|---|---|---|---|
| Quelleninformation | 0 0 0 0 | | 1 0 0 1 |
| Additiv (3) | 0 0 1 1 | | 0 0 1 1 |
| Kanalcode | 0 0 1 1 | | 1 1 0 0 |
| inverses Element | 1 1 0 1 | | 1 1 0 1 |
| rückgewonnenes Signal | (1)0 0 0 0 | | (1)1 0 0 1 |

Der entstehende Übertrag bleibt unberücksichtigt.

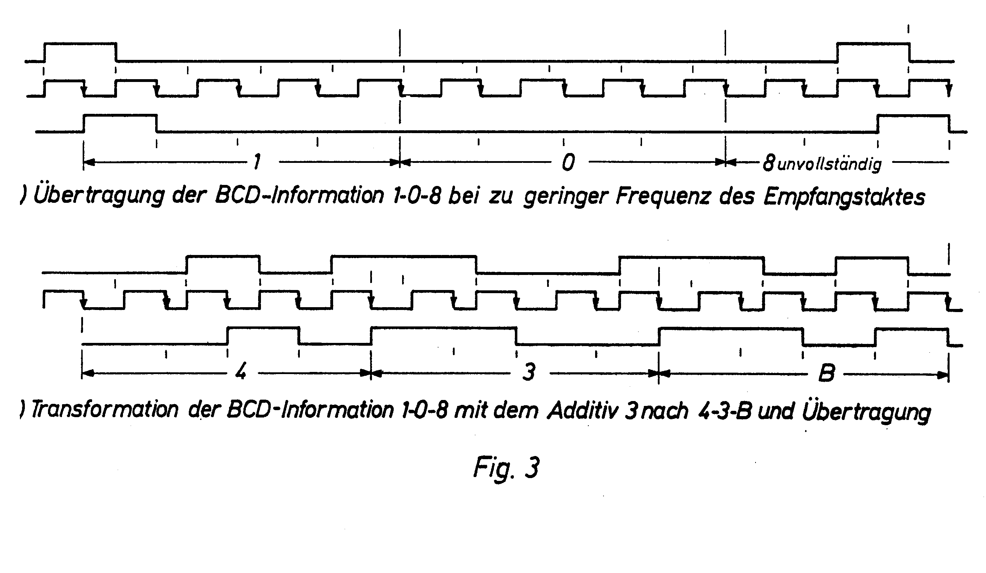

In Fig. 3 ist ein Ausführungsbeispiel angegeben, bei dem einmal

a) die BCD-Information 1-0-8 bei zu geringer Frequenz des Empfangstaktes übertragen und nur unvollständig wiedergewonnen wird.

Das andere Mal

b) wird die BCD-Information 1-0-8 mit dem Additiv (3) nach 4-3-B (hexadezimale Schreibweise für 11) transformiert und übertragen, wobei die wiedergewonnene Information vollständig erhalten wird.

- 6 -

Wenn beispielsweise die übertragene Information mit der negativen Flanke des Empfangstaktes in die Empfangsschaltung übernommen wird, dann zeigt das Beispiel a) deutlich, daß die letzte übertragene Ziffer unvollständig übernommen wird, während infolge der erfindungsgemäß erhaltenen Kanalcodierung für eine erhöhte Anzahl von Logikwechseln zur Synchronisation des Empfangstaktes der Kanalcode richtig übernommen wird und damit fehlerfrei weiterverarbeitet werden kann.

Die gezeigten Spannungsverläufe in Fig. 3 zeigen jeweils bei a) das Datensignal, den Empfangstakt und das wiedergewonnene Informationssignal und bei b) das codierte Datensignal, den Empfangstakt und das wiedergewonnene Informationssignal.

ROBERT BOSCH GMBH, Stuttgart

Ansprüche

1. Verfahren zur Taktrückgewinnung bei nichtkohärenter
   Frequenzumtastung von seriell zu übertragenden Daten
   mit einem empfangsseitig vorgesehenen freischwingenden
   Oszillator, dadurch gekennzeichnet, daß bei jedem
   Codewort der zu übertragenden Daten einer Datenquelle
   sendeseitig ein Additiv (A) in einer ersten Addierschaltung (50) addiert wird, daß mit dem erhaltenen
   Kanalcode empfangsseitig über eine Schaltungsanordnung
   (40) die Taktfrequenz des Empfängertaktes hervorgerufen
   und auf das einlaufende Signal synchronisiert wird und
   daß zur Rekonstruktion jedes von der Datenquelle ausgesendeten Codewortes des Kanalcodes empfangsseitig das
   zum Additiv inverse Element $((A)^i)$ in einer zweiten
   Addierschaltung (60) addiert wird.

2. Verfahren nach Anspruch 1, dadurch gekennzeichnet, daß
   der erhaltene Kanalcode empfangsseitig über die Schaltungsanordnung (40) auf eine aus jedem Logikwechsel
   einen Impuls hervorrufende Schaltungseinrichtung (10)
   gegeben wird, daß der hervorgerufene Impuls auf einen
   Teilerschaltkreis (30) geführt wird und daß die Frequenz
   des am Teilerschaltkreis angeschlossenen freischwingenden
   Oszillatorschaltkreises (20) auf die Taktfrequenz des
   Empfängertaktes heruntergeteilt wird.

3. Verfahren nach Anspruch 1 oder 2, dadurch gekennzeichnet, daß als Additiv eine konstante Binärzahl zu jedem Codewort addiert wird.

4. Verfahren nach einem der Ansprüche 1 bis 3, dadurch gekennzeichnet, daß bei der Addition entstehende Überträge nicht berücksichtigt werden.

5. Verfahren nach einem oder mehreren der Ansprüche 1 bis 4, dadurch gekennzeichnet, daß der hervorgerufene Impuls auf den Rücksetzeingang des Teilerschaltkreises (30) der Schaltungsanordnung (40) geführt wird.

6. Verfahren nach einem oder mehreren der Ansprüche 1 bis 5, dadurch gekennzeichnet, daß bei einem aus allen auftretenden Codewörtern gebildeten unvollständigen Quellencode der Datenquelle das Additiv so gewählt wird, daß weder das Einsnoch das Nullwort hervorgerufen wird.

113

Fig. 1

213

$f_O$ = Taktfrequenz

Fig. 2

) Übertragung der BCD-Information 1-0-8 bei zu geringer Frequenz des Empfangstaktes

) Transformation der BCD-Information 1-0-8 mit dem Additiv 3 nach 4-3-B und Übertragung

Fig. 3

**Europäisches Patentamt**

## EUROPÄISCHER RECHERCHENBERICHT

EP 79101798.1

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| X | NACHRICHTENTECHNISCHE ZEITSCHRIFT, 27. Jahrgang, Heft 12, Dez. 1974, Seiten 475 bis 479 H. MÜLLER "Bit Sequence Independence Through Scramblers in Digital Communications Systems" + Seiten 475 und 476 + -- | 1 |
| X | DE - B1 - 2 634 353 (SIEMENS) + Spalte 2, Zeile 28 bis Spalte 3, Zeile 1 + -- | 1 |
| A | DE - A - 1 537 949 (INTERNATIONAL BUSINESS MACHINES) + Seite 1, Zeile 1 bis Seite 2, Zeile 10; Seite 7, Zeile 10 bis Seite 8, Zeile 8 + -- | 1 |
| A | DE - C1 - 978 065 (R. HELL) + Spalte 3, Zeile 68 bis Spalte 4, Zeile 55 + -- | 1 |
| P | DE - A1 - 2 741 760 (ESG) (29. März 1979) + Seite 6, Zeile 18 bis Seite 8, Zeile 12; Figur 3 + -- | 1 |
| A | US - A - 4 029 905 (M. ABRAHAM) + Spalte 1, Zeile 5 bis 52 + -- | 1,2 |
| A | DE - A - 2 048 118 (SIEMENS) + Seite 1, Zeile 1 bis 9 + ---- | 1 |

### KLASSIFIKATION DER ANMELDUNG (Int.Cl.²)

H 04 L 27/10
H 04 L 7/02
H 04 J 3/06

### RECHERCHIERTE SACHGEBIETE (Int. Cl.²)

H 04 L 27/10
H 04 L 27/12
H 04 L 27/14
H 04 L 7/00
H 04 L 7/02
H 04 L 9/02
H 04 L 3/00
H 04 K 1/02
H 04 J 3/06

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 18-09-1979 | HAJOS |